# EUROPEAN PATENT SPECIFICATION

(11) **EP 2 164 215 B1**
(45) Date of publication and mention of the grant of the patent: **26.10.2011**
(21) Application number: 08164257.1
(22) Date of filing: 12.09.2008
(51) Int. Cl.: H04L 25/49, H04L 7/033

(54) **Method and device for serial transmission of digital data**
Verfahren und Vorrichtung zur seriellen Übertragung von digitalen Daten
Procédé et dispositif pour la transmission en série de données numériques

(43) Date of publication of application: 17.03.2010
(73) Proprietor: INOVA Semiconductors GmbH, 81671 München (DE)
(72) Inventor: Neumann, Roland, 81671 München (DE); Riedel, Michael, 81671 München (DE)
(74) Representative: Winter, Brandl, Fürniss, Hübner, Röss, Kaiser, Polte - Partnerschaft

(56) References cited:
- EP-A- 1 696 621
- WO-A-2004/047085
- WO-A-2004/066576
- US-A- 5 663 985
- US-B1- 6 205 182
- US-B1- 6 748 022

## Description

### TECHNICAL FIELD

The present invention relates generally to a method and a device for serial transmission of digital data and more specifically to a method and device for serial transmission of digital data using clock and data recovery without separate transmission of clock.

### BACKGROUND

In serial transmission of digital data there arises the general problem of clock and data recovery at a receiving side.

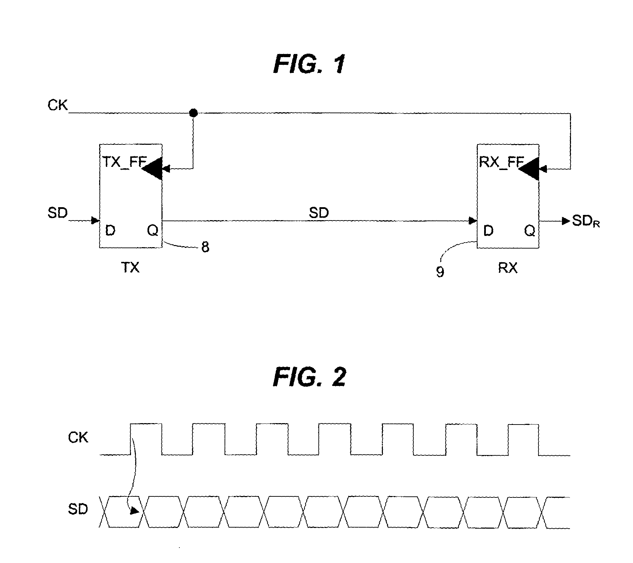

Fig. 1 is a schematic representation of a prior art arrangement at a transmitting side TX and a receiving side RX and Fig. 2 is a schematic diagram of a clock signal and serial data transmitted using the prior art arrangement of Fig. 1.

In Fig. 1 a transmit flip flop (TX_FF) 8 is provided at the transmitting side TX and a receive flip flop (RX_FF) 9 is provided at the receiving side RX. A common clock CK is inputted to the clock input of the TX_FF 8 and to the clock input of the RX_FF 9. Serial data SD are inputted to the D input of the TX_FF 8 in accordance with the common clock CK and are then outputted at a Q output of the TX_FF 8 in accordance with the common clock CK. The serial data SD are then transmitted from the transmitting side TX to the receiving side RX via a serial transmission line.

At the receiving side RX the transmitted serial data SD are inputted to the input D of the RX_FF 9 in accordance with the common clock CK and are then outputted at the Q output of the RX_FF 9 in accordance with the common clock CK to obtain recovered serial data SD_{R}.

As shown in Fig. 2, the serial data SD are responsive to the rising edge (level transition from low to high) of the common clock CK. This means that the serial data SD present at the D input of the TX_FF 8 are latched at the TX_FF 8 at a first rising edge of the common clock CK, are outputted at the Q output of the TX_FF 8 at a second rising edge of the common clock CK and transmitted via the serial communication line, are latched at the RX_FF 9 at a third rising edge of the common clock CK and are outputted at the Q output of the RX_FF 9 at a fourth rising edge of the common clock CK. The first to fourth rising edges are timely subsequent rising edges of the common clock CK.

Instead of the rising edges of the common clock CK the falling edges (level transitions from high to low) of the common clock CK or both of the rising edges and the falling edges of the common clock CK can be used for the purposes mentioned above.

Since the common clock CK is common to the transmitting side TX and the receiving side RX, no problems arise as regards recovery of the clock of the transmitting side TX at the receiving side RX and therefore no problem arises as regards recovery of data of the transmitting side TX at the receiving side RX using a clock at the receiving side RX which is synchronized with a clock at the transmitting side TX. However, there is the need to transmit the common clock CK from the transmitting side TX to the receiving side RX which requires a separate transmission of clock which, in turn, requires an additional transmission line.

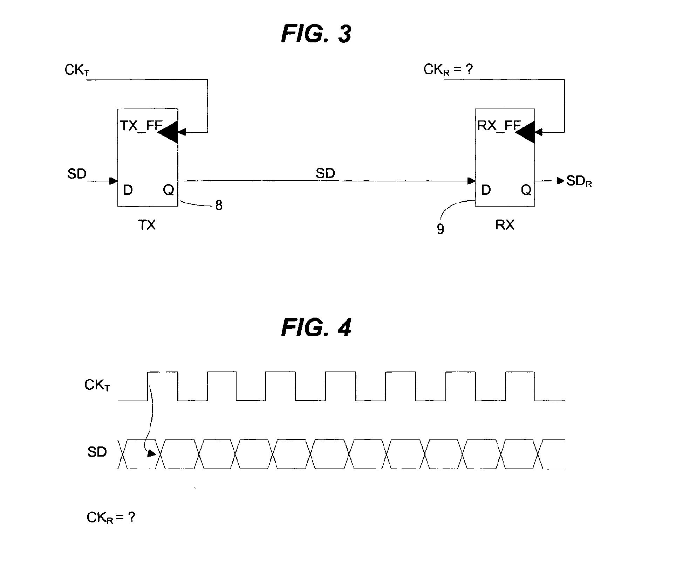

Fig. 3 is a schematic representation of a further prior art arrangement at the transmitting side TX and the receiving side RX and Fig. 4 is a schematic diagram of a clock signal and serial data transmitted using the prior art arrangement of Fig. 3.

It is now considered to omit an additional transmission line for transmission of clock. However, in this case the question arises how to synchronize a clock CK_{R} at the receiving side RX with a clock CK_{T} at the transmitting side TX to be able to perform data recovery at the receiving side RX. This problem is obvious from Fig. 3 and Fig. 4 by CK_{R} =?

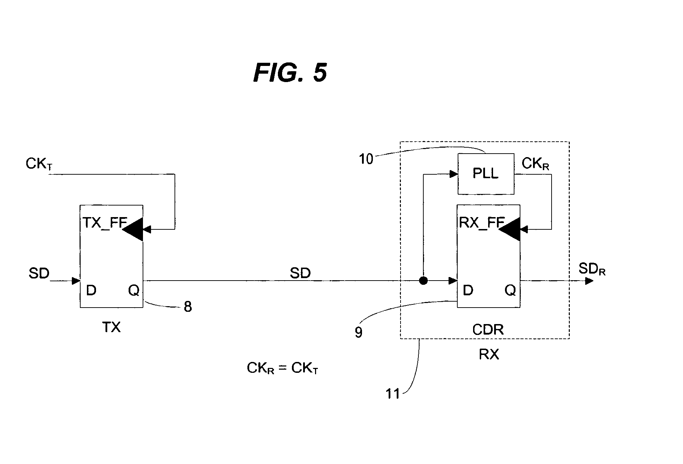

Fig. 5 is a schematic representation of a still further prior art arrangement at the transmitting side TX and the receiving side RX.

As shown in Fig. 5, the TX_FF 8 receives a clock CK_{T} at a clock input thereof and processes serial data SD present at a D input of the TX_FF 6 in the same manner as described above with respect to Fig. 1 and Fig. 2. At the receiving side RX the serial data SD transmitted from the transmitting side TX via the serial transmission line are present at the D input of the RX_FF 9.

In Fig. 5 the RX_FF 9 and a phased locked loop (PLL) unit 10 constitute a clock and data recovery (CDR) unit 11. The PLL unit 10 and the RX_FF 9 receive the serial data transmitted from the transmitting side TX via the serial transmission line. The serial data SD are coded such that a clock CK_{R} which is synchronized with the clock CK_{T} and has the same frequency as the clock CK_{T}, i.e. CK_{T} = CK_{R}, can be obtained by the PLL unit 10 and outputted at a clock output thereof. This clock CK_{R} is then inputted to the clock input of the RX_FF 9 to obtain recovered serial data SD_{R} at the Q output of the RX FF 9.

In this prior art arrangement the serial data SD transmitted via the serial transmission line have to be coded such that a clock CK_{R} which has the same frequency as the clock CK_{T} at the transmitting side and is synchronized with the clock CK_{T} at the transmitting side can be recovered from the transmitted serial data SD. In this manner the separate transmission of the clock CK_{T} at the transmitting side TX to the receiving side RX using an additional transmission line can be avoided.

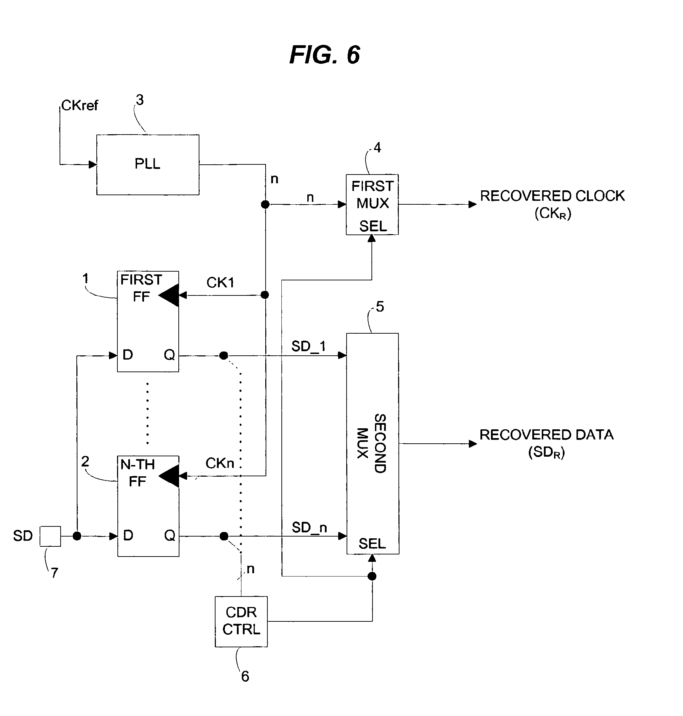

Fig. 6 is a schematic representation of a receiving side of a prior art device for serial transmission of digital data without separate transmission of clock.

As shown in Fig. 6 the receiving side of this prior art device comprises first to n-th flip flops (FF) 1 and 2, wherein the second to (n-1)-th flip flops are not shown in Fig. 6 but are merely indicated by the dotted line between the first and n-th FFs 1 and 2, a phased locked loop (PLL) unit 3, a first multiplexer (MUX) 4, a second multiplexer (MUX) 5, a clock and data recovery control (CDR CTRL) unit 6 and a serial data (SD) input 7. The elements 1 to 7 together constitute a reconverting unit which, in more detail, is a clock and data recovery (CDR) unit.

At a transmitting side (not shown) a serial stream of digital data comprising a sequence of bits is generated. The generated serial stream of digital data is then line-coded using a known method of line-coding and then transmitted to the receiving side via a serial transmission line. The line-coding of the generated serial stream of digital data is used to achieve DC-balance on the serial transmission line or the like.

At the receiving side a transmitted serial stream of digital data, i.e. serial data SD, is received at the serial data (SD) input 7 and inputted to each D input of the first to n-th FFs 1 and 2. The PLL unit 3 receives at an input thereof a clock signal CKref having the same frequency as a clock at the transmitting side but having no fixed phase relation to the clock at the transmitting side, i.e. which is not synchronized with the clock at the transmitting side.

The PLL unit 3 generates first to n-th clock signals CK1 to CKn having the same frequency but being shifted in phase by a predetermined amount relative to each other.

The first to n-th clock signals CK1 to CKn are inputted to a clock input of the first to n-th FFs 1 and 2, respectively. The first to n-th FFs 1 and 2 latch the serial data SD inputted to the D input thereof in accordance with the clock signal inputted to the clock input and output respective serial data SD_1 to SD_n at a Q output thereof in accordance with the clock signal inputted to the clock input.

The CDR CTRL unit 6 receives the respective serial data SD_1 to SD_n outputted at the Q output of the first to n-th FFs 1 and 2 and selects appropriate serial data from the respective serial data SD_1 to SD_n in accordance with a predetermined algorithm.

In more detail, the CDR CTRL control unit 6 selects one of the first to n-th serial data SD_1 to SD_n which is outputted at one of the Q outputs of the first to n-th FFs 1 and 2 in accordance with one of the clock signals CK1 to CKn which fits best to the clock at the transmitting side, i.e. which is synchronized best with the clock at the transmitting side, in accordance with the predetermined algorithm. A signal which indicates the selection made by the CDR CTRL unit 6 is outputted at an output of the CDR CTRL unit 6 and is inputted to a select (SEL) input of each of the first and second MUXs 4 and 5.

The first MUX 4 receives at an input thereof the first to n-th clock signals CK₁ to CKₙ outputted at the output of the PLL unit 3. The first MUX 4 multiplexes the first to n-th clock signals CK₁ to CKₙ such that one of these clock signals which is synchronized best with the clock at the transmitting side is outputted at an output of the first MUX 4 in accordance with the signal inputted to the SEL input of the first MUX 4.

The second MUX 5 receives at inputs thereof the first to n-th serial data SD_1 to SD_n outputted at the outputs of the first to n-th FFs 1 and 2. The second MUX 5 multiplexes the first to n-th serial data SD_1 to SD_n such that one of these serial data which is obtained using one of the clock signals CK₁ to CKₙ which is synchronized best with the clock at the transmitting side is outputted at an output of the second MUX 5 in accordance with the signal inputted to the SEL input of the second MUX 5.

Consequently, the output signal of the first MUX 4 corresponds to a recovered clock CK_{R} and the output signal of the second MUX 5 corresponds to recovered data SD_{R}.

In practice such device as shown in Fig. 1 is able to transmit serial data via a serial transmission line having a length up to 30 m with a bit rate up to 1 Gbit/s.

If a data transmission rate, i.e. bit rate, of this device has to be increased there arises the need to provide a serial transmission line which is able to transmit serial data using such increased data transmission rate and there is the further need to, especially, adapt the elements of the receiving side such that serial data which are transmitted using such increased data transmission rate can be processed in a suitable manner to obtain recovered clock and recovered data.

Document EP 1 696 621 A1 discloses an apparatus for transmitting data from a first modul to a second modul and a method for encoding data wherein three signals (3. input bits: clock, request and one bit of data) are converted into one single output signal by means of puls width modulation in accordance with the falling edge of the input signals.

From document WO 2004/066576 A1 a method and device for transmitting a puls width modulated self-clocking signal is known wherein data are transferred using a binary signal, said binary signal consists of alternating clock signal portions each indicating a transition of the clock signal, and data portions (data 1, data 0) coding a binary bit.

### SUMMARY

It is an object of the present invention to provide a method and a device for serial transmission of digital data which provide improved data transmission rate in serial transmission of digital data and simultaneously recover clock and data using a simple structure.

As to the method this object is solved by the measures indicated in claim 1 and as to the device this object is solved by the measures indicated in claim 7.

Further advantageous modifications of the present invention are subject matter of the dependent claims.

As an illustrative example, a method for serial transmission of digital data is disclosed, comprising the steps of generating a serial stream of digital data comprising a sequence of bits, converting the serial stream of digital data into a serial stream of symbols, wherein each symbol being indicative of a plurality of 2ⁿ bits, n being an integer equal to or greater than 1, by coding the sequence of bits such that the plurality of 2ⁿ bits of each symbol being indicated by a signal having a level transition within a period of each symbol and a phase shift of the level transition within a period of each symbol, transmitting the serial stream of symbols, receiving the transmitted serial stream of symbols, and reconverting the transmitted serial stream of symbols into the serial stream of digital data.

Advantageously, one bit of the plurality of 2" bits is indicated by a direction of the level transition within the period of each symbol and at least another bit of the plurality of 2ⁿ bits is indicated by the phase shift of the level transition within the period of each symbol with respect to a predetermined zero position.

Advantageously, the step of reconverting is performed by using clock and data recovery.

Advantageously, clock recovery is performed by phased locked loop control being triggered by the serial stream of symbols to generate a plurality of clock signals being shifted in phase by a predetermined amount relative to each other, and data recovery is performed by detecting individual phases of the symbols of the serial stream of symbols using the plurality of clock signals and separately recognizing the different phase shifts of the level transition within the period of each symbol with respect to the predetermined zero position and the direction of the level transition within the period of each symbol to derive recovered data.

Advantageously, the predetermined zero position is defined by a recovered clock.

Advantageously, the signal having a level transition within the period of each symbol is coded by biphase coding and the phase shift within the period of each symbol is coded by phase shift keying.

Advantageously, the plurality of 2ⁿ bits of each symbol is additionally indicated by amplitude or slope of amplitude of the signal having a level transition within a period of each symbol.

As an illustrative example, a device for serial transmission of digital data is provided, comprising a generating unit being adapted to generate a serial stream of digital data comprising a sequence of bits, a converting unit being adapted to convert the serial stream of digital data into a serial stream of symbols, wherein each symbol being indicative of a plurality of **2ⁿ** bits, n being an integer equal to or greater than 1, by coding the sequence of bits such that the plurality of **2ⁿ** bits of each symbol being indicated by a signal having a level transition within a period of each symbol and a phase shift of the level transition within a period of each symbol and to transmit the serial stream of symbols via a serial transmission line, and a reconverting unit being adapted to receive the transmitted serial stream of symbols and to reconvert the transmitted serial stream of symbols into the serial stream of digital data.

Advantageously, the converting unit is adapted to code the sequence of bits such that one bit of the plurality of 2ⁿ bits is indicated by a direction of the level transition within the period of each symbol and at least another bit of the plurality of 2ⁿ bits is indicated by the phase shift of the level transition within the period of each symbol with respect to a predetermined zero position.

Advantageously, the reconverting unit is a clock and data recovery unit.

Advantageously, the clock and data recovery unit comprises a phase locked loop unit which is adapted to be triggered by the serial stream of symbols to generate a plurality of clock signals being shifted in phase by a predetermined amount relative to each other, and a data recovery unit which is adapted is to detect individual phases of the symbols of the serial stream of symbols using the plurality of clock signals and to separately recognize the different phase shifts of the level transition within the period of each symbol with respect to the predetermined zero position and the direction of the level transition within the period of each symbol to derive recovered data.

Advantageously, the oversampling unit comprises a plurality of flip flops each receiving the transmitted serial stream of symbols.

Advantageously, each of the plurality of flip flops receives one of a plurality of clock signals from the phase locked loop unit, wherein the plurality of clock signals received by the plurality of flip flops.

Advantageously, the reconverting unit is adapted to define the predetermined zero position by a recovered clock.

Advantageously, the converting unit is adapted to code the signal having a level transition within the period of each symbol by biphase coding and to code the phase shift within the period of each symbol by phase shift keying.

Advantageously, the plurality of 2ⁿ bits of each symbol is additionally indicated by slope of amplitude or amplitude of the signal having a level transition within a period of each symbol.

### DESCRIPTION OF THE DRAWINGS

The accompanying drawings, where like numerals indicate like components, illustrate embodiments of the present invention.
Fig. 1 is a schematic representation of a prior art arrangement at a transmitting side and a receiving side.
Fig. 2 is a schematic diagram of a clock signal and serial data transmitted using the prior art arrangement of Fig. 1.
Fig. 3 is a schematic representation of a further prior art arrangement at the transmitting side and the receiving side.
Fig. 4 is a schematic diagram of a clock signal and serial data transmitted using the prior art arrangement of Fig. 3.
Fig. 5 is a schematic representation of a still further prior art arrangement at the transmitting side and the receiving side.
Fig. 6 is a schematic representation of a prior art device for serial transmission of digital data without separate transmission of clock.
Fig. 7 is a schematic representation of a device for serial transmission of digital data according to the present invention.
Fig. 8 is a schematic diagram of symbols.
Fig. 9 is a schematic diagram of phase shift keying.
Fig. 10 is a schematic diagram of a combination of biphase coding and phase shift keying.
Fig. 11 is another schematic diagram of a combination of biphase coding and phase shift keying.
Fig. 12 is a schematic diagram of symbols assigned to different states of the combination of biphase coding and phase shift keying shown in Fig. 11.
Fig. 13 is a schematic representation of a reconverting unit of the device of Fig. 7 according to an embodiment of the present invention.
Fig. 14 is a more detailed schematic representation of a phase locked loop unit shown in Fig. 13.
Fig. 15 shows schematic diagrams of relations of respective signals within the phase locked loop unit shown in Fig. 14.
Fig. 16 is a more detailed schematic representation of a voltage controlled oscillator shown in Fig. 13.
Fig. 17 is schematic diagram of respective clock signals within the voltage controlled oscillator shown in Fig. 16.
Fig. 18 is a schematic diagram of a combination of biphase coding, phase shift keying and amplitude slope coding.
Fig. 19 is a schematic diagram of symbols assigned to different states of the combination of biphase coding, phase shift keying and amplitude slope coding shown in Fig. 18.
Fig. 20 is a schematic diagram of the different states of the combination of biphase coding, phase shift keying and amplitude slope coding shown in Fig. 18.
Fig. 21 is a schematic diagram of a signal obtained by the combination of biphase coding, phase shift keying and amplitude slope coding shown in Fig. 18.
Fig. 22 is a schematic representation of a reconverting unit of the device of Fig. 7 according to another embodiment of the present invention.
Fig. 23 is a schematic diagram of a signal obtained by a combination of biphase coding, phase shift keying and amplitude coding.

### DETAILED DESCRIPTION

Reference will now be made in detail to some embodiments of the present invention, examples of which are illustrated in the accompanying drawings in which the same or corresponding parts are denoted by the same reference signs throughout the several figures of the accompanying drawings.

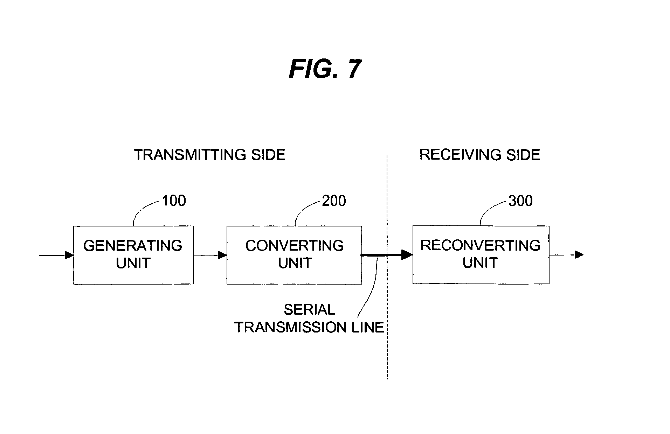

Fig. 7 is a schematic representation of a device for serial transmission of digital data according to the present invention.

In more detail, Fig. 7 shows the arrangement of the device at a transmitting side and a receiving side. This arrangement is used in all embodiments of the present invention mentioned below.

As shown in Fig. 7, at the transmitting side there are provided a generating unit 100 and a converting unit 200 and at the receiving side there is provided a reconverting unit 300.

The generating unit 100 receives at an input thereof digital data and generates a serial stream of digital data which comprises a sequence of bits. The generated serial stream of digital data is outputted at an output of the generating unit 100 to be inputted to an input of the converting unit 200. The converting unit 200 converts the serial stream of digital data into a serial stream of symbols and transmits the serial stream of symbols to the reconverting unit 300 at the receiving side via a serial transmission line. The reconverting unit 300 receives the transmitted serial stream of symbols and reconverts the transmitted serial stream of symbols into the serial stream of digital data.

The functional principle underlying the generation of the serial stream of symbols will be described below in further detail.

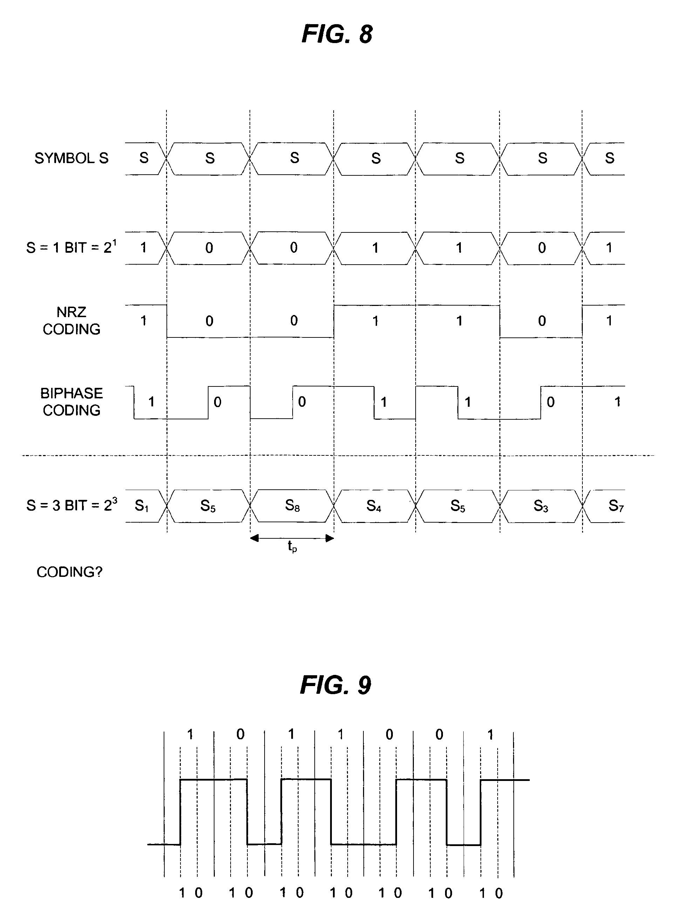

Fig. 8 is a schematic diagram of symbols.

The first line of Fig. 8 schematically shows symbols to be transmitted via the serial transmission line.

As is shown in the second line of Fig. 8, each symbol can be assigned to one bit, i.e. 0 or 1, such that each symbol corresponds to one bit or 2¹, i.e. 2, different states. This is for example the case in the prior art devices mentioned above. The bits can be coded using non-return to zero (NRZ) coding as shown in the third line of Fig. 8. However, in this case the serial transmission line is not DC-balanced. To achieve DC-balance of the serial transmission line there is the possibility to perform biphase coding of the bits to be transmitted via the serial transmission line. Such biphase coding is also known as Manchester coding and provides a level transition within each symbol as shown in the fourth line of Fig. 8. In more detail, in the following it is assumed that according to biphase coding a symbol having a transition from 1 to 0 indicates a bit having a logical state 1 and a symbol having a transition from 0 to 1 indicates a bit having a logical state 0. However, also an inverse logic of the transitions can be used instead in which a symbol having a transition from 0 to 1 indicates a bit having a logical state 1 and a symbol having a transition from 1 to 0 indicates a bit having a logical state 1.

If it is now assumed that the bit rate of the NRZ coded symbol of the second line of Fig. 8 is for example 1 Gbit/s, wherein the bit rate is defined as number of bits per unit of time, it is obvious that the toggle rate is half the bit rate of 1 Gbit/s and is therefore 500 Mbit/s. This means the signal frequency of the NRZ coded symbol via the serial transmission line is 500 MHz. Contrary to this, the toggle rate of the biphase coded symbol of the third line of Fig. 8 is twice the toggle rate of the NRZ coded symbols of the second line of Fig. 8 and is therefore 1 Gbit/s which is equal to the bit rate of 1 Gbit/s. Therefore, it is obvious that the toggle rate depends on the manner in which the symbols are coded, i.e. depends on the manner of line coding.

Contrary to this, the present invention uses symbols having 2³, i.e. eight, different states, i.e. three bits, which can be transmitted simultaneously via the serial transmission line as is obvious from the fifth line of Fig. 8.

However, each of the NRZ coding shown in the third line of Fig. 8 and the biphase coding shown in the fourth line of Fig. 8 is merely able to code a symbol having 2¹ states, i.e. two states, i.e. one bit and therefore cannot be used alone to code three bits which can be transmitted simultaneously via the serial transmission line. Thus, there arises the question which coding can be used to code symbols having more than two states as shown in Fig. 8 by "coding?".

To achieve the symbols having eight different states, i.e. three bits, there is used a combination of biphase coding already mentioned above and phase shift keying (PSK) on a bit level as will be described below in further detail.

In this case, the bit rate is 3 Gbit/s as compared to the aforementioned case of transmitting symbols having merely two different states.

Using the example above, the bandwidth is increased to 3 Gbit/s because three bits are transmitted simultaneously. Although the toggle rate depends on the manner of line-coding of the symbols transmitted via the serial transmission line the toggle rate is not increased depending on the increase of different states of symbols and, therefore, there is no need to provide a serial transmission line which is able to transmit serial data using an increased data transmission rate. Contrary, the bandwidth of the serial transmission line is the same as for transmission of bits as mentioned above.

Fig. 9 is a schematic diagram of phase shift keying (PSK).

As shown in Fig. 9, PSK uses a phase shift from a zero position to define two different states of a bit. This means that a phase shift from a zero position determines a logical state of 0 or 1 of a bit. In this case an information of whether there is a logical state of 0 or 1 is not coded in an amplitude of a signal but is coded in a phase shift relative to a predetermined zero position. If the zero position is defined using a recovered clock the information is coded in a phase shift relative to the recovered clock.

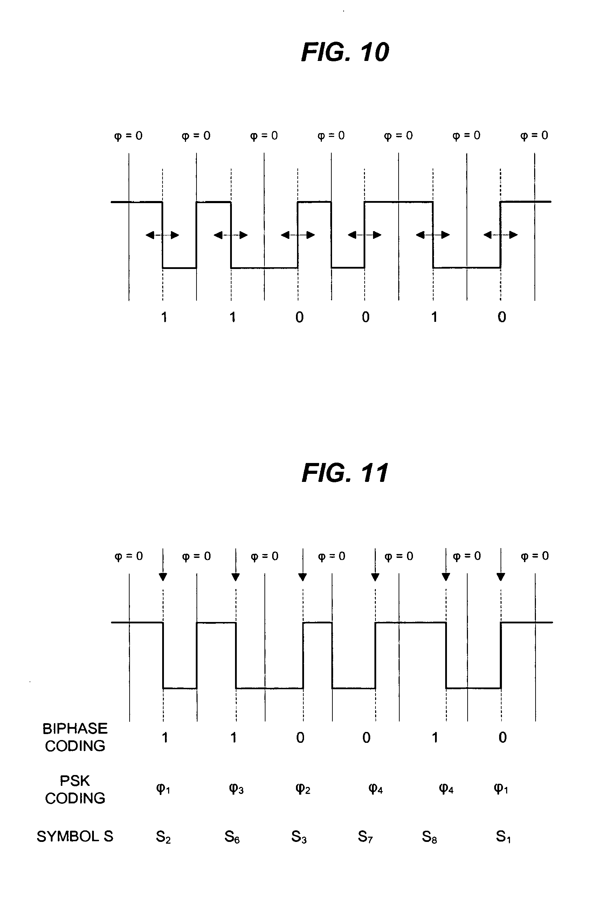

Fig. 10 is a schematic diagram of a combination of biphase coding and phase shift keying.

Using the aforementioned biphase coding in combination with PSK results in the possibility to define symbols being indicative of a plurality of 2ⁿ bits, wherein n is an integer equal to or greater than 1. In the following the case of n = 3, i.e. the case of eight different states of the symbols, is considered. However, this is not limiting for the present invention.

As mentioned above, biphase coding results in symbols each having a level transition during a period of the symbol. This level transition codes states of each symbol such that a level transition from 1 to 0 indicates a logical 1 and a level transition from 0 to 1 indicates a logical 0. Since a level transition is present in each symbol, there is the further possibility to use a phase shift of the level transition from a predetermined zero position to code further information indicative of logical states of each symbol.

As shown in Fig. 10, the boundary between adjacent symbols is used as a reference defining a zero position of ϕ = 0 and there are used four phase shifts relative to this zero position to indicate four states in addition to the two states defined by the level transition in each symbol, resulting in eight different states, i.e. three bits.

Fig. 11 is another schematic diagram of a combination of biphase coding and phase shift keying.

Possible assignments of each of the eight states of the aforementioned combination of biphase coding using a level transition from 1 to 0 and a level transition from 0 to 1 and PSK using four different phase shifts ϕ₁ to ϕ₄ relative to a zero position ϕ = 0 between adjacent symbols are obvious from Fig. 11.

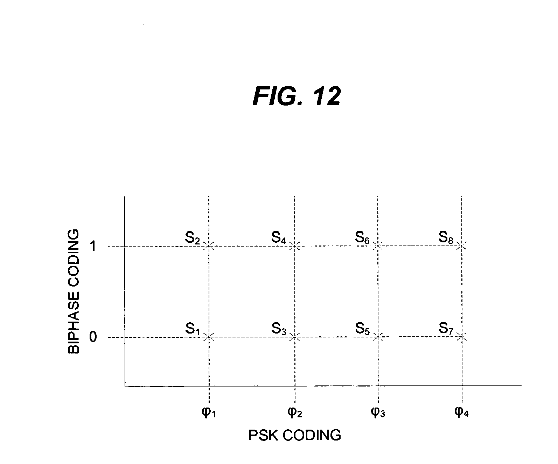

Fig. 12 is a schematic diagram of symbols assigned to different states of the combination of biphase coding and phase shift keying shown in Fig. 11.

All symbols assigned to different states of the combination of biphase coding and phase shift keying are obvious from Fig. 12 which shows a two-dimensional coordinate system in which the two different states 1 and 0 obtained by the level transitions of the biphase coding are plotted against the four different phase shifts ϕ₁ to ϕ₄ used by the PSK. However, this specific assignment is not limiting and any other assignment can be used as long as the eight obtained symbols can be derived in an unambiguous manner.

Referring back to Fig. 6, the generating unit 100 generates the serial stream of digital data comprising the sequence of bits, each bit being indicative of a logical state 0 or 1. This serial stream of digital data is outputted from the generating unit 100 and inputted to the converting unit 200.

The converting unit 200 converts the serial stream of digital data into a serial stream of symbols by the aforementioned combination of biphase coding and PSK such that each symbol being indicative of a plurality of n, for example three, bits using a clock at a transmitting side as a reference for example for the zero position defined by a boundary between adjacent symbols and the different phase shifts used by PSK.

The serial stream of symbols is outputted from the converting unit 200 and transmitted to the receiving side via the serial transmission line. The converting unit 300 at the receiving side receives the transmitted serial stream of symbols.

In the following the recovery of the clock and of the data contained in the serial stream of symbols is described in further detail.

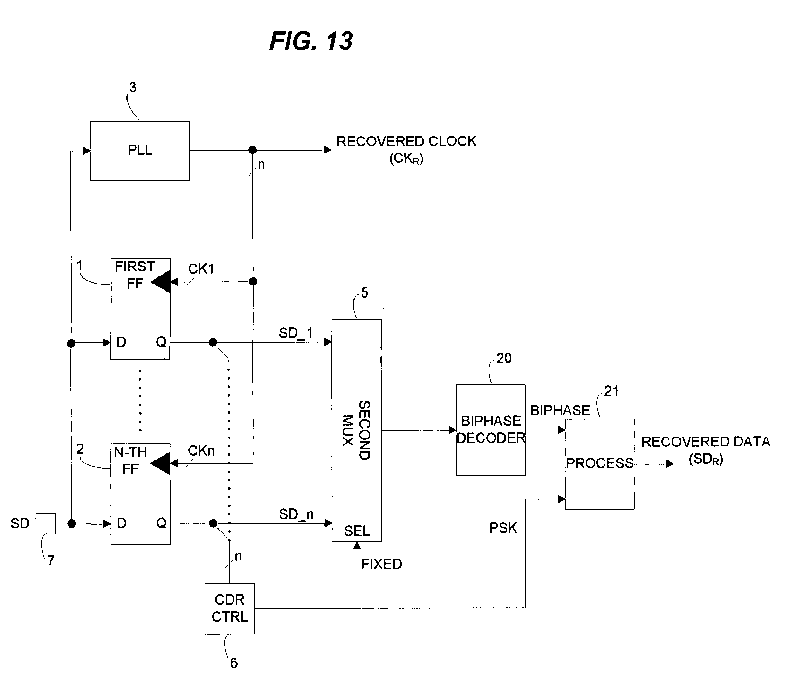

Fig. 13 is a schematic representation of the reconverting unit 300 of the device of Fig. 7 according to an embodiment of the present invention.

As shown in Fig. 13 the receiving side of this device comprises first to n-th flip flops (FF) 1 and 2, wherein the second to (n-1)-th flip flops are not shown in Fig. 13 but are merely indicated by the dotted line between the first and n-th FFs 1 and 2, a phased locked loop (PLL) unit 3, a second multiplexer (MUX) 5, a clock and data recovery control (CDR CTRL) unit 6, a serial data (SD) input 7 a biphase decoding unit (biphase decoder) 20 and a processing unit (process) 21. The elements 1 to 3, 5 to 7, 20 and 21 together constitute a reconverting unit which, in more detail, is a clock and data recovery (CDR) unit.

At the transmitting side (not shown) the serial stream of symbols is generated as mentioned above by the combination of biphase coding and PSK such that each symbol can have one of eight states.

At the receiving side the transmitted serial stream of symbols is received at the serial data (SD) input 7 and inputted to each D input of the first to n-th FFs 1 and 2 and to an input of the PLL unit 3 as a clock CKref.

The PLL unit 3 generates first to n-th clock signals CK1 to CKn having the same frequency as the frequency of a clock at the transmitting side, being synchronized with the clock at the transmitting side, but being shifted in phase by a predetermined amount relative to each other as will be shown in the following in more detail.

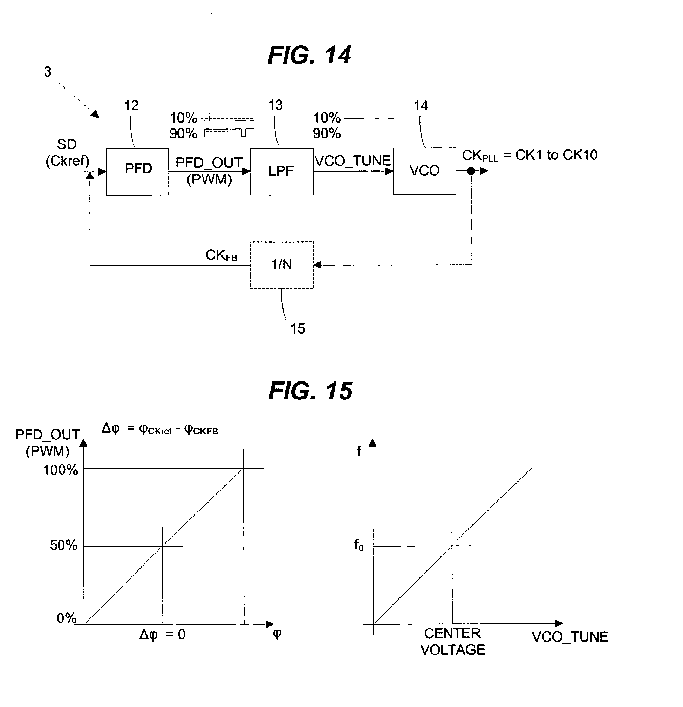

Fig. 14 is a more detailed schematic representation of the PLL unit 3 shown in Fig. 13.

As shown in Fig. 14, the PLL unit 3 comprises a phase and frequency discriminating (PFD) unit 12, a low pass filter unit 13 also called a loop filter unit, a voltage controlled oscillator (VCO) unit 14 and optionally a dividing (1/N) unit 15 as shown by dotted lines.

An input of the PFD unit 12 receives the serial stream of symbols SD transmitted from the transmitting side. An output of the PFD unit 12 is connected to an input of the LPF unit 13. The output of the LPF unit 13 is connected to an input of the VCO unit 14. The output of the VCO unit 14 outputs a clock CK_{PLL} which is one of clocks CK1 to CK10 as will be described later in more detail. Furthermore, the output of the VCO unit 14 is connected to another input of the PFD unit 12 to constitute a feedback path which can optionally comprise the 1/N unit 15.

The PFD unit 12 compares the clock obtained from the serial stream of symbols SD, i.e. the clock CKref, to a clock CK_{FB} which is the clock which is fed back from the output of the VCO unit 14 to the other input of the PFD unit 12 and detects a phase difference Δϕ = ϕ_{CKref} - ϕ_{CKFB} between the two clocks CKref and CK_{FB}. In accordance with the detected phase difference Δϕ the PFD unit 12 generates a pulse width modulated (PWM) signal PDF OUT (PWM).

Fig. 15 shows schematic diagrams of relations of respective signals within the PLL unit 12 shown in Fig. 14.

In more detail, the left diagram of Fig. 14 shows the relation between a phase difference of the two clocks CKref and CK_{FB} inputted to the respective inputs of the PFD unit 12 and a duty ratio of the PWM signal PFD_OUT (PWM) outputted from the PFD unit 12. The duty ratio is defined as a ratio between the pulse duration and the period of a rectangular waveform.

If the phase difference Δϕ between the two clocks CKref and CK_{FB} is zero, i.e. Δϕ = 0, the duty ratio of the PWM signal PFD_OUT (PWM) is 50%. If the phase difference Δϕ increases from Δϕ = 0, i.e. becomes positive, the duty ratio of the PWM signal PFD_OUT (PWM) increases up to more than 50% proportional to the phase difference Δϕ between the two clocks CKref and CK_{FB} and if the phase difference Δϕ decreases from Δϕ = 0, i.e. becomes negative, the duty ratio of the PWM signal PFD OUT (PWM) decreases up to less than 50% proportional to the phase difference Δϕ between the two clocks CKref and CK_{FB}.

In general, the duty ratio of the PWM signal PFD_OUT (PWM) is proportional to the phase difference Δϕ between the two clocks CKref and CK_{FB}.

As examples two PWM signals PFD_OUT (PWM) having a duty ratio of 10% and 90%, respectively, are shown in Fig. 14.

The PWM signal PFD_OUT (PWM) thus obtained is outputted from the PFD unit 12 and inputted to the LPF unit 13.

The LPF unit 13 functions as a loop filter unit of the PLL unit and generates a DC voltage signal VCO TUNE in a steady state. The amplitude of the DC voltage signal VCO_TUNE is proportional to the duty ratio of the PWM signal PFD_OUT (PWM) and is therefore proportional to the phase difference Δϕ between the two clocks CKref and CK_{PLL}

It should be noted that the DC voltage signal VCO_TUNE generated by the LPF unit 13 is held for a predetermined period of time if no PWM signal PFD_OUT (PWM) is inputted to the LPF unit 13 and, thus, in this case the PLL unit operates using the DC voltage signal VCO_TUNE held in the LPF unit 13 and is therefore free-running.

The DC voltage signal VCO_TUNE is outputted from the LPF unit 13 and inputted to the VCO unit 14. The VCO unit 14 is a proportional element and, thus, the frequency outputted from the VCO unit 14 is proportional to the amplitude of the DC voltage signal VCO-TUNE and is therefore proportional to the duty ratio of the PWM signal PFD_OUT (PWM) and is therefore also proportional to the phase difference Δϕ between the two clocks CKref and CK_{PLL}.

In more detail, the right diagram of Fig. 15 shows the relation between the DC voltage signal VCO_TUNE inputted to the VCO unit 14 and the frequency f of the signal outputted from the VCO unit 14.

If the DC voltage signal VCO_TUNE is a center voltage corresponding to a phase shift Δϕ = 0 in the left diagram of Fig. 15 the frequency f of the signal outputted from the VCO unit 14 is f₀. If the DC voltage signal VCO_TUNE increases the frequency f of the signal outputted from the VCO unit 14 increases proportional to the DC voltage signal VCO_TUNE and if the DC voltage signal VCO_TUNE decreases the frequency f of the signal outputted from the VCO unit 14 decreases proportional to the DC voltage signal VCO_TUNE.

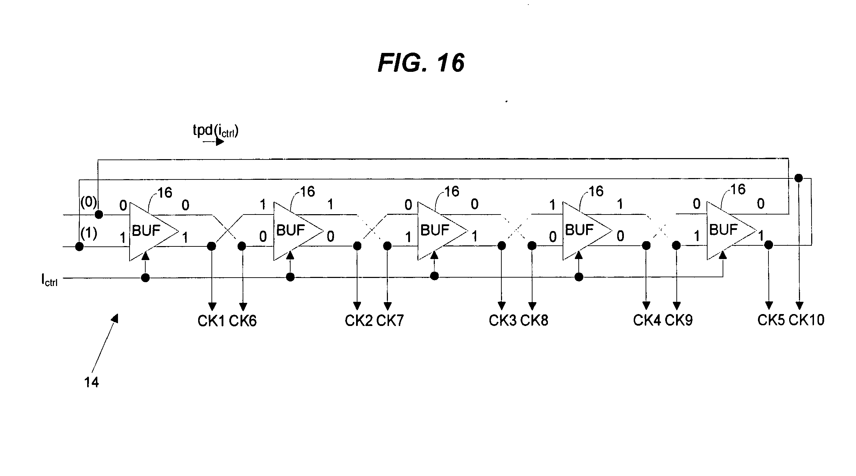

Fig. 16 is a more detailed schematic representation of the VCO unit 14 shown in Fig. 13.

As is obvious from Fig. 16 the VCO unit 14 comprises a plurality of buffer (BUF) units 16 which are connected in series to thereby form a plurality of stages. In the case of Fig. 16 five BUF units 16 are shown. However, each uneven number of BUF units 16 can be used instead.

The outputs of each BUF unit 16 are crossed with each other to thereby form respective inverters. Each of the respective inverters inverts a signal inputted thereto and outputs the inverted signal to an input of a inverter of a next stage. The signal outputted from the inverter of a last stage is fed back to the input of the inverter of a first stage. Consequently, the VCO unit 14 oscillates. It is important to note that such oscillation only takes place because each inverter has a delay time. This means in the case shown in Fig. 16 if a logical 1 is inputted to an input of the inverter of the first stage it takes five times the delay time of an inverter until a logical 0 is present at the output of the inverter of the last stage and then it takes again five times the delay time of an inverter until a logical 1 is present at the output of the inverter of the last stage. This defines the oscillating frequency of the VCO unit 14.

The oscillating frequency of the VCO unit 14 is controlled as follows. A delay time of each BUF unit 16 can be controlled by a current l_{ctrl} inputted to a supply terminal of each BUF unit 16. If the current l_{ctrl} is low the BUF units 14 are slow and have a high delay time. If the current l_{ctr} is high the BUF units 14 are rapid and have a low delay time.

As shown in Fig. 16, outputs and inverted outputs of all BUF units 16 are tapped as clocks CK1 to CK10 and due to the delay time of each BUF unit 16 the clocks CK1 to CK10 are shifted from each other by one delay time t_{pd} of a BUF unit 16 in the order of CK1 to CK10. Thus, there is obtained a multiphase clock system.

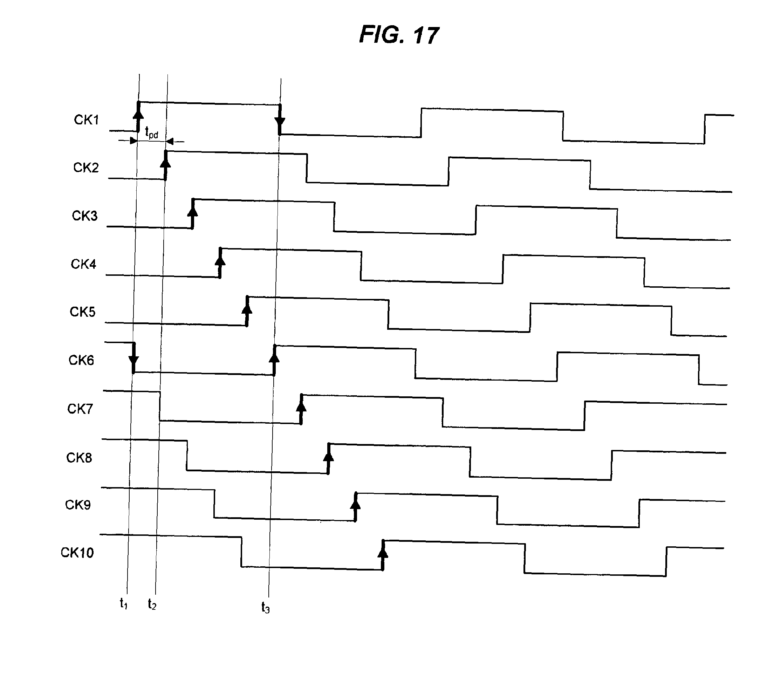

Fig. 17 is schematic diagram of respective clock signals within the VCO unit 14 shown in Fig. 16.

As shown in Fig. 17 the multiphase clock system has ten clocks CK1 to CK10 each having a period of ten times the delay time t_{pd} of a BUF unit 16 and therefore, if the clocks CK1 to CK10 are used, the multiphase clock system provides a virtual clock system which is ten times faster than the frequency of a basic clock inputted to the VCO unit 14, i.e. the clock CKref.

Referring back to Fig. 14, the PLL unit 3 optionally comprises the 1/N unit 15 which functions to generate a clock CK_{PLL} at the output of the PLL unit 3 which has a frequency which is N times the frequency of the clock CKref inputted to the PLL unit 3. N denotes the dividing ratio of the 1/N unit 15.

Furthermore, as shown in Fig. 14 the clock CKref inputted to the PLL unit 3 is the serial stream of symbols SD received from the transmitting side via the serial transmission line. Therefore, the PLL unit 3 recovers a clock underlying the serial stream of symbols SD, i.e. the clock at the transmitting side, by regulating a clock CK_{PLL} outputted from the PLL unit 3 such that this clock CK_{PLL} has a fixed phase shift Δϕ, preferably Δϕ = 0, to the serial stream of symbols SD inputted to the PLL unit 3 if there is a level transition in the serial stream of symbols SD. Furthermore, since the LPF unit 13 holds a DC voltage signal VCO_TUNE generated from a PWM signal PFD_OUT (PWM) inputted to the LPF unit 13 if there is no level transition in the serial stream of symbols SD the PLL unit 3 performs regulating based on the DC voltage signal VCO_TUNE held by the LPF unit 13 and is therefore in a free-running state.

The multiphase clock system shown in Fig. 16 generates ten clocks CK1 to CK10 to provide the virtual clock system which is ten times faster than the frequency of the clock at the transmitting side underlying the serial stream of symbols SD.

As mentioned above, the serial stream of symbols SD is used as a reference clock CKref of the PLL unit 3. The PLL unit generates a clock CK_{PLL} which is one of the clocks CK1 to CK10 from the serial stream of symbols SD and which is the recovered clock CD_{R}. The recovered clock CD_{R} is synchronized with the serial stream of symbols SD and is therefore synchronized with the clock at the transmitting side which underlies the serial stream of symbols SD.

Referring back to Fig. 13, the clocks CK1 to CKn (in the case described above CK1 to CK10) are inputted to respective clock inputs of the first to n-th FFs 1 and 2 and are also inputted to inputs of the CDR CTRL unit 6. Since the PLL unit 3 receives the serial stream of symbols SD as reference clock CKref and the clock at the transmitting side underlies the serial stream of symbols SD there is achieved an overall clock system at the receiving side which is synchronized with the clock at the transmitting side.

As mentioned above, the PLL unit 3 generates first to n-th clock signals CK1 to CKn having the same frequency but being shifted in phase by a predetermined amount relative to each other and being synchronized with a clock at the transmitting side.

Consequently, the output of the PLL unit 3 directly corresponds to the recovered clock CK_{R}.

The first to n-th clock signals CK1 to CKn are inputted to a clock input of the first to n-th FFs 1 and 2, respectively. The first to n-th FFs 1 and 2 latch the serial data SD inputted to the D input thereof in accordance with the clock signal inputted to the clock input and output respective serial data SD_1 to SD_n at a Q output thereof in accordance with the clock signal inputted to the clock input.

The CDR CTRL unit 6 receives the respective serial data SD_1 to SD_n outputted at the Q output of the first to n-th FFs 1 and 2 in accordance with one of the clocks CK1 to CKn inputted to the clock input of a respective one of the first to n-th FFs 1 and 2, wherein the clocks CK1 to CKn having the same frequency, being shifted in phase by a predetermined amount relative to each other and being synchronized with the clock at the transmitting side. Thus, there is achieved oversampling of the serial stream of symbols using the clocks CK1 to CK10 and therefore the first to n-th FFs 1 and 2 constitute an oversampling unit.

Since the overall clock system at the receiving side is synchronized with the clock at the transmitting side as mentioned above and since each of the clocks Ck1 to CKn has a fixed phase relation to the clock CKref inputted to the PLL unit 3 which is the serial stream of symbols each output of the CDR CTRL unit 6 directly indicates an information about a phase shift between a symbol which is held in a respective one of the first to n-th FFs 1 and 2 and a normalized clock. Thus, there is the possibility of achieving n times resolution of phase. In other words, resolution is the width of a symbol divided by n. Therefore, the phase can be decoded directly.

The second MUX 5 receives at inputs thereof the first to n-th serial data SD_1 to SD_n outputted at the outputs of the first to n-th FFs 1 and 2. The second MUX 5 multiplexes the first to n-th serial data SD_1 to SD_n in a fixed order such as from SD_1 to SD_n using a signal indicative of this fixed order at the SEL input thereof.

Therefore, one of the serial data SD_1 to SD_n which is selected by the signal indicative of the fixed order is outputted from the second multiplexer 5 and then inputted to the biphase decoding unit 20. The biphase decoding unit 20 detects the level transitions in the received serial data and performs biphase decoding of the received serial data.

Furthermore, since the output signal of the CDR CTRL 6 unit is directly indicative of the phase relation between a respective symbol and the normalized clock, the output signal of the CDR CTRL unit 6 is directly indicative of a phase shift of a symbol due to phase shift keying. The output signals of the biphase decoding unit 20 and of the DCR CTRL unit 6 are then inputted to the processing unit 21 which generates recovered serial data SD_{R} based on the signals inputted thereto. Consequently, the recovered serial data SD_{R} correspond to the serial stream of digital data comprising a sequence of bits generated by the generating unit 100 at the transmitting side.

Above, there has been described the use of a combination of biphase coding and PSK in clock and data recovery. However, there is also the possibility to use a combination of biphase coding, PSK and amplitude slope coding or amplitude coding as will be described below in further detail.

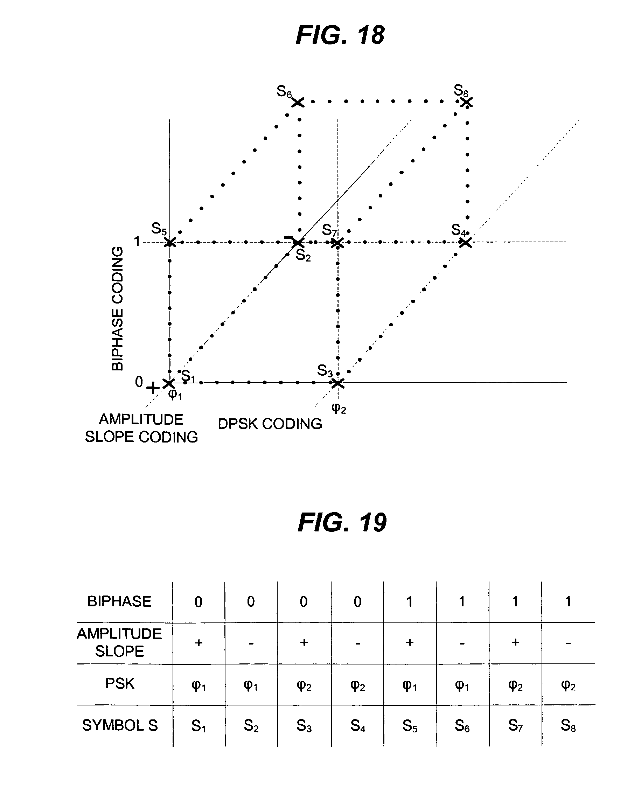

Fig. 18 is a schematic diagram of a combination of biphase coding, phase shift keying and amplitude slope coding and Fig. 19 is a schematic diagram of symbols assigned to different states of the combination of biphase coding, phase shift keying and amplitude slope coding shown in Fig. 18.

In more detail, Fig. 18 shows a three-dimensional coordinate system of assignments of respective symbols to two states 1 and 0 of biphase coding, two states obtained by two different phase shifts of ϕ₁ and ϕ₂ of phase shift keying and two states obtained by two different amplitude slopes, i.e. positive and negative, of amplitude slope coding. Consequently, according to Fig. 18 there is also the possibility to obtain 2³, i.e. eight, different states of a symbol, i.e. to obtain a symbol having three bits as is also more fully obvious from Fig. 19. However, this is not limiting for the present invention.

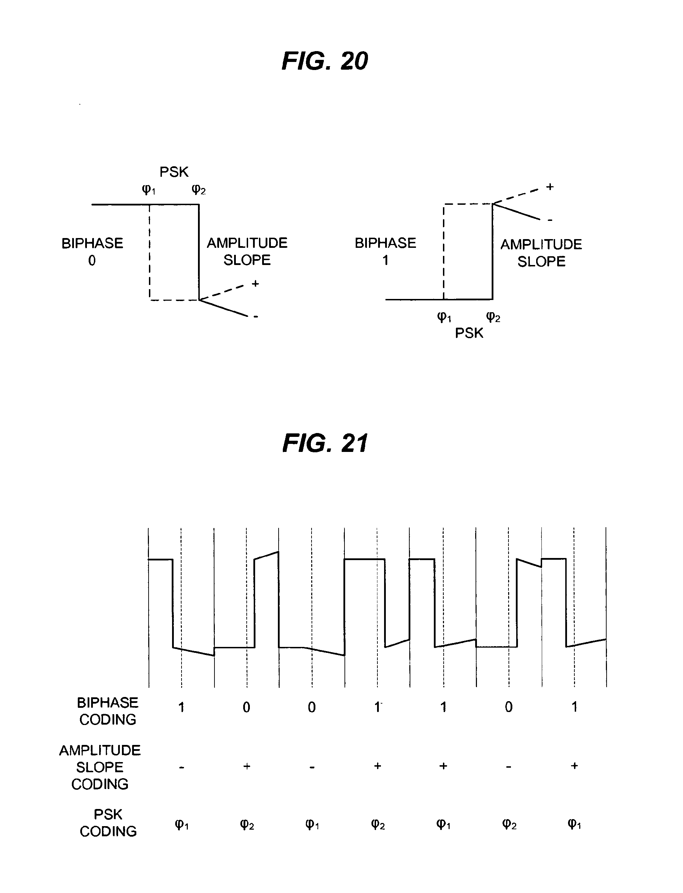

Fig. 20 is a schematic diagram of the different states of the combination of biphase coding, phase shift keying and amplitude slope coding shown in Fig. 18.

As shown in Fig. 20, the different states of the combination of biphase coding, phase shift keying and amplitude slope coding are expressed by a level transition from 1 to 0, corresponding to a logical state 0, and a level transition from 0 to 1, corresponding to a logical state of 1, of biphase coding, by a phase shift ϕ₁ and a phase shift ϕ₂ of PSK and a positive amplitude slope, i.e. +, and a negative amplitude slope, i.e. -, of amplitude slope coding.

Fig. 21 is a schematic diagram of a signal obtained by the combination of biphase coding, phase shift keying and amplitude slope coding shown in Fig. 18.

In more detail, an exemplary stream of symbols obtained by the aforementioned combination of biphase coding, phase shift keying and amplitude slope coding as well as respective states obtained by biphase coding, PSK and amplitude slope coding and associated to each of the symbols is shown in Fig. 21 for clarification.

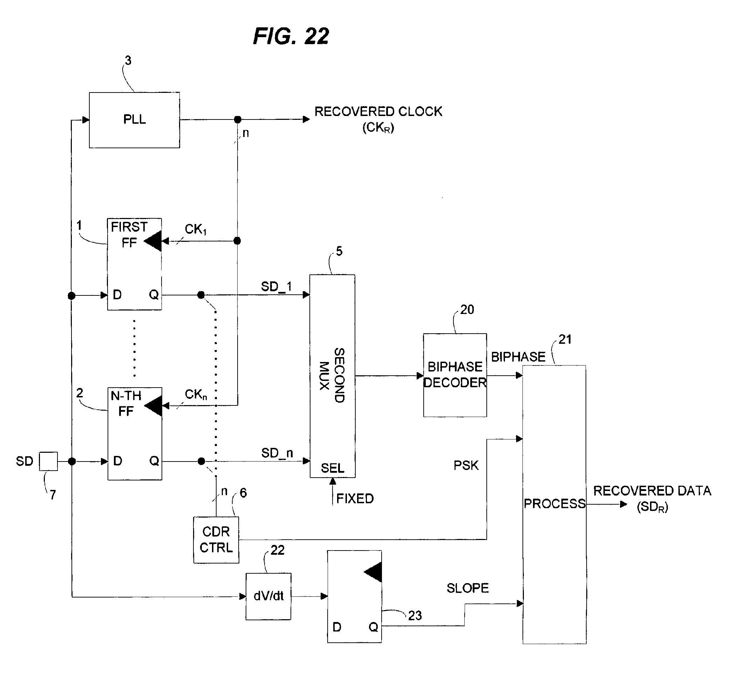

Fig. 22 is a schematic representation of a reconverting unit of the device of Fig. 7 according to another embodiment of the present invention.

It should be noted that the reconverting unit shown in Fig. 22 is identical in structure and function to the reconverting unit shown in Fig. 13 except for the use of a dV/dt unit 22 which detects an amplitude slope of the serial stream of symbols inputted to the SD input 7, the use of a further flip flop 23 which holds an output signal of the dV/dt unit 22 indicative of the amplitude slope of the serial stream of symbols inputted to the SD input 7 and the additional function of the processing unit 21 to additionally use an output signal of the further flip flop 23 which is also indicative of the amplitude slope of the serial stream of symbols inputted to the SD input 7 to generate the recovered serial data SD_{R}.

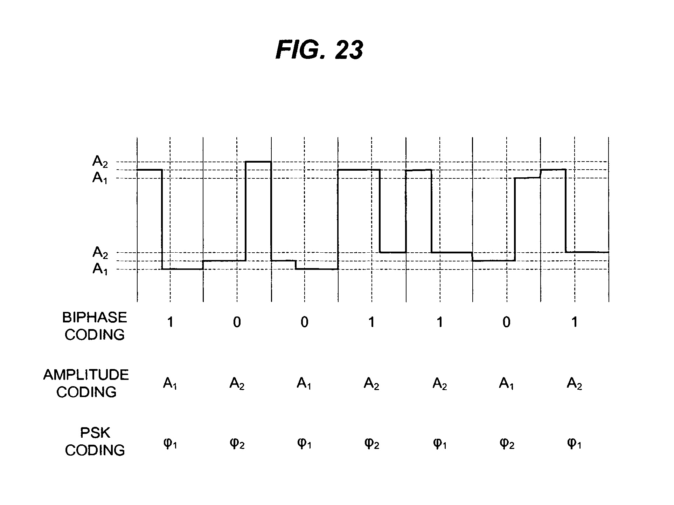

Fig. 23 is a schematic diagram of a signal obtained by a combination of biphase coding, PSK and amplitude coding.

Instead of using amplitude slope coding in combination with biphase coding and PSK, amplitude coding can be used as is shown in Fig. 23. In case of amplitude coding different values A₁ and A₂ of amplitudes are used to indicate different states instead of using positive and negative amplitude slopes + and - as is the case in amplitude slope coding mentioned above.

In this case the dV/dt unit 22 shown in Fig. 22 is replaced by an amplitude detecting unit which detects respective amplitudes of the serial stream of symbols inputted to the SD input 7 and outputs a output signal indicative of such amplitudes which is used in further processing.

It should be noted that the reconverting unit using amplitude coding instead of amplitude slope coding is identical in structure and function to the reconverting unit shown in Fig. 22 except for the difference mentioned above,

Although the present invention has been described in connection with certain specific embodiments for instructional purposes, the present invention is not limited thereto. Accordingly, various modifications, adaptations, and combinations of various features of the described embodiments can be practiced without departing from the scope of the present invention as set forth in the claims.

## Claims

1. Method for serial transmission of digital data, comprising the steps of:
generating a serial stream of digital data comprising a sequence of bits, each of said bits presenting two states;
converting the serial stream of digital data into a serial stream of symbols (SD) by a combination of bi-phase coding and phase shift keying
wherein said converting is **characterised in that** two states representing 1 data bit within each symbol, achieved by bi-phase coding, are indicated by a direction of the level transition within the period of each symbol and that 2ⁿ⁻¹ states representing n-1 data bits within each symbol, achieved by phase shift keying, are indicated by the phase shift of the level transition within said period of said each symbol, with respect to a predetermined zero position
thereby forming a signal having a level transition and a phase shift within each symbol period, each symbol representing 2ⁿ states and covering the content of up to n of said bits, n being an integer greater than one;
transmitting the serial stream of symbols (SD);
receiving the transmitted serial stream of symbols (SD); and
reconverting the transmitted serial stream of symbols (SD) into the serial stream of digital data (SD_{R}).

2. Method of claim 1; wherein the step of reconverting is performed by using clock and data recovery.

3. Method of claim 2, wherein
clock recovery is performed by phased locked loop control being triggered by the serial stream of symbols (SD) to generate a plurality of clock signals (CKn) being shifted in phase by a predetermined amount relative to each other, and
data recovery is performed by detecting individual phases of the symbols of the serial stream of symbols (SD) using the plurality of clock signals (CKn) and separately recognizing the different phase shifts of the level transition within the period of each symbol with respect to the predetermined zero position and the direction of the level transition within the period of each symbol to derive recovered data (SD_{R}).

4. Method of claim 3, wherein the predetermined zero position is defined by a recovered clock (CK_{R}).

5. Method of one of claims 1 to 4, wherein the step of converting the serial stream of digital data into a serial stream of symbols (SD) is performed by a combination of bi-phase coding, phase shift keying, and amplitude slope coding.

6. Method of claim 5, wherein a third group of states of each symbol (SD) achieved by amplitude slope coding is indicated by a level transition within the period of each symbol.

7. Device for serial transmission of digital data, comprising:
a generating unit (100) being adapted to generate a serial stream of digital data comprising a sequence of bits, each of said bits presenting two states;
converting unit (200) being adapted to convert the serial stream of digital data into a serial stream of symbols (SD) by a combination of bi-phase coding and phase shift keying;
wherein said converting unit (200) is **characterised by** means achieving bi-phase coding wherein two states representing 1 data bit within each symbol are indicated by a direction of the level transition within the period of each symbol and by means achieving phase shift keying wherein 2ⁿ⁻¹ states representing n-1 data bits within each symbol are indicated by the phase shift of the level transition within said period of said each symbol, with respect to a predetermined zero position
thereby forming a signal having a level transition and a phase shift within each symbol period, each symbol representing 2ⁿ states and covering the content of up to n of said bits, n being an integer greater than one, and by
means transmitting the serial stream of symbols via a serial transmission line; and
a reconverting unit (300) being adapted to transmit serial stream of symbols (SD) and to reconvert the transmitted serial stream of symbols into the serial stream of digital data (SD_{R}).

8. Device of claim 7, wherein the reconverting unit (300) is a clock and data recovery unit.

9. Device of claim 8, wherein the clock and data recovery unit comprises
a phase locked loop unit (3) which is adapted to be triggered by the serial stream of symbols (SD) to generate a plurality of clock signals (CKn) being shifted in phase by a predetermined amount relative to each other, and
a data recovery unit which is adapted is to detect individual phases of the symbols of the serial stream of symbols (SD) using the plurality of clock signals (CKn) and to separately recognize the different phase shifts of the level transition within the period of each symbol with respect to the predetermined zero position and the direction of the level transition within the period of each symbol to derive recovered data (SD_{R}).

10. Device of claim 9, wherein the data recovery unit comprises a plurality of flip flops (1, 2) each receiving the transmitted serial stream of symbols (SD).

11. The device of claim 9, wherein each of the plurality of flip flops (1, 2) receives one of the plurality of clock signals (CKn) from the phase locked loop unit (3).

12. Device of one of claims 9 to 11, wherein the reconverting unit (300) is adapted to define the predetermined zero position by a recovered clock (CK_{R}).

13. Device of one of claims 7 to 12, wherein the converting unit (200) is adapted to convert the serial stream of digital data into a serial stream of symbols (SD) by a combination of bi-phase coding, phase shift keying, and amplitude slope coding.

14. Device of claims 13, wherein the converting unit (200) is adapted to encode each symbol in such a way, that a third group of states of each symbol (SD) achieved by amplitude slope coding is indicated by a level transition within the period of each symbol.

## Patentansprüche

1. Verfahren zum seriellen Übertragen von digitalen Daten, das die folgenden Schritte umfasst:
Erzeugen eines seriellen Stroms digitaler Daten, der eine Sequenz von Bits umfasst, wobei jedes dieser Bits zwei Zustände darstellt;
Wandeln des seriellen Stroms digitaler Daten in einen seriellen Strom von Symbolen (SD) durch eine Kombination aus Zweiphasenkodierung und Phasenumtastung,
wobei das Wandel **dadurch gekennzeichnet ist, dass** zwei Zustände, die ein Datenbit innerhalb jedes Symbols abbilden, das durch Zweiphasenkodierung erlangt wird, durch eine Richtung des Pegelübergangs innerhalb der Periode jedes Symbols angegeben werden, und dass 2ⁿ⁻¹ Zustände, die n-1 Datenbits innerhalb jedes Symbols abbilden, das durch Phasenumtastung erlangt wird, durch die Phasenverschiebung des Pegelübergangs innerhalb der Periode jedes Symbols bezüglich einer vorbestimmten Nullposition angegeben werden,
wodurch ein Signal ausgebildet wird, das einen Pegelübergang und eine Phasenverschiebung innerhalb jeder Symbolperiode aufweist, wobei jedes Symbol 2ⁿ Zustände abbildet und den Inhalt von bis zu n der Bits abdeckt, wobei n eine Ganzzahl ist, die größer als 1 ist;
Übertragen des seriellen Stroms von Symbolen (SD);
Empfangen des übertragenen seriellen Stroms von Symbolen (SD); und
Rückwandeln des übertragenen seriellen Stroms von Symbolen (SD) in den seriellen Strom von digitalen Daten (SD_{R}).

2. Verfahren gemäß Anspruch 1, wobei der Schritt des Rückwandelns unter Verwendung von Takt- und Datenrückgewinnung durchgeführt wird.

3. Verfahren gemäß Anspruch 2, wobei
Taktrückgewinnung durch eine Phasenregelschleifensteuerung durchgeführt wird, die durch den seriellen Strom von Symbolen (SD) angesteuert wird, um mehrere Taktsignale (CKn) zu erzeugen, die um einen vorbestimmten Betrag relativ zueinander phasenverschoben werden, und
Datenrückgewinnung durch Erfassen einzelner Phasen der Symbole des seriellen Stroms von Symbolen (SD) unter Verwendung der mehreren Taktsignale (CKn) und separates Erkennen der unterschiedlichen Phasenverschiebungen des Pegelübergangs innerhalb der Periode jedes Symbols bezüglich der vorbestimmten Nullposition und der Richtung des Pegelübergangs innerhalb der Periode jedes Symbols durchgeführt wird, um die rückgewonnenen Daten (SD_{R}) zu erlangen.

4. Verfahren gemäß Anspruch 3, wobei die vorbestimmte Nullposition durch einen rückgewonnenen Takt (CK_{R}) definiert wird.

5. Verfahren gemäß einem der Ansprüche 1 bis 4, wobei der Schritt des Wandelns des seriellen Stroms von digitalen Daten in einen seriellen Strom von Symbolen (SD) durch eine Kombination von Zweiphasenkodierung, Phasenumtastung und Amplitudenflankenkodierung durchgeführt wird.

6. Verfahren gemäß Anspruch 5, wobei eine dritte Gruppe von Zuständen jedes Symbols (SD), die durch Amplitudenflankenkodierung erlangt wird, durch einen Pegelübergang innerhalb der Periode jedes Symbols angegeben wird.

7. Vorrichtung zum seriellen Übertragen digitaler Daten, aufweisend:
eine Erzeugungseinheit (100) die ausgelegt ist, einen seriellen Strom digitaler Daten zu erzeugen, der eine Sequenz von Bits umfasst, wobei jedes dieser Bits zwei Zustände darstellt;
Wandlungseinheit (200), die ausgelegt ist, den seriellen Strom digitaler Daten in einen seriellen Strom von Symbolen (SD) durch eine Kombination aus Zweiphasenkodierung und Phasenumtastung zu wandeln;
wobei die Wandlungseinheit (200) durch Mittel **gekennzeichnet** ist, die Zweiphasenkodierung erlangen, wobei zwei Zustände, die ein Datenbit innerhalb jedes Symbols abbilden, durch eine Richtung des Pegelübergangs innerhalb der Periode jedes Symbols angegeben werden, und durch Mittel, die Phasenumtastung erlangen, wobei 2ⁿ⁻¹ Zustände, die n-1 Datenbits innerhalb jedes Symbols abbilden, durch die Phasenverschiebung des Pegelübergangs innerhalb der Periode jedes Symbols bezüglich einer vorbestimmten Nullposition angegeben werden,
wodurch sie ein Signal ausbilden, das einen Pegelübergangs und eine Phasenverschiebung innerhalb jeder Symbolperiode aufweist, wobei jedes Symbol 2" Zustände abbildet und den Inhalt von bis zu n der Bits abdeckt, wobei n eine Ganzzahl ist, die größer als 1 ist;
Mittel, die den seriellen Stroms von Symbolen (SD) mittels einer seriellen Übertragungsleitung übertragen; und
eine Rückwandlungseinheit (300), die ausgelegt ist, serielle Ströme von Symbolen zu übertragen und den übertragenen seriellen Strom von Symbolen (SD) in den seriellen Strom von digitalen Daten (SD_{R}) rückzuwandeln.

8. Vorrichtung gemäß Anspruch 7, wobei die Rückwandlungseinheit eine Takt- und Datenrückgewinnungseinheit ist.

9. Vorrichtung gemäß Anspruch 8, wobei die Takt- und
Datenrückgewinnungseinheit
eine Phasenregelschleifensteuereinheit (3), die ausgelegt ist, durch den seriellen Strom von Symbolen (SD) angesteuert zu werden, um mehrere Taktsignale (CKn) zu erzeugen, die um einen vorbestimmten Betrag relativ zueinander phasenverschoben werden, und
eine Datenrückgewinnungeinheit aufweist, die ausgelegt ist, einzelne Phasen der Symbole des seriellen Stroms von Symbolen (SD) unter Verwendung der mehreren Taktsignale (CKn) zu erfassen und die unterschiedlichen Phasenverschiebungen des Pegelübergangs innerhalb der Periode jedes Symbols bezüglich der vorbestimmten Nullposition und der Richtung des Pegelübergangs innerhalb der Periode jedes Symbols separat zu erkennen, um die rückgewonnenen Daten (SD_{R}) zu erlangen.

10. Vorrichtung gemäß Anspruch 9, wobei die Datenrückgewinnungeinheit mehrere Flip Flops (1, 2) aufweist von denen jedes den übertragenen seriellen Strom von Symbolen (SD) empfängt.

11. Vorrichtung gemäß Anspruch 9, wobei jedes der mehreren Flip Flops (1, 2) eines der mehreren Taktsignale (CKn) von der Phasenregelschleifensteuereinheit (3) empfängt.

12. Vorrichtung gemäß einem der Ansprüche 9 bis 11, wobei die Rückwandlungseinheit (300) ausgelegt ist, die vorbestimmte Nullposition durch einen rückgewonnenen Takt (CK_{R}) zu definieren.

13. Vorrichtung gemäß einem der Ansprüche 7 bis 12, wobei die Wandlungseinheit (200) ausgelegt ist, den seriellen Strom von digitalen Daten in einen seriellen Strom von Symbolen (SD) durch eine Kombination von Zweiphasenkodierung, Phasenumtastung und Amplitudenflankenkodierung zu wandeln.

14. Vorrichtung gemäß Anspruch 13, wobei die Wandlungseinheit (200) ausgelegt ist, jedes Symbol derart zu kodieren, dass eine dritte Gruppe von Zuständen jedes Symbols (SD), die durch Amplitudenflankenkodierung erlangt wird, durch einen Pegelübergang innerhalb der Periode jedes Symbols angegeben wird.

## Revendications

1. Procédé de transmission en série de données numériques, comprenant les étapes consistant à :
générer un flux en série de données numériques comprenant une séquence de bits, chacun desdits bits présentant deux états ;
convertir le flux en série de données numériques en un flux en série de symboles (SD) par une combinaison d'encodage bi-phase et de modulation par déplacement de phase
dans lequel ladite conversion est **caractérisée en ce que** deux états représentant 1 bit de données dans chaque symbole, atteint par encodage bi-phase, sont indiqués par une direction de la transition de niveau dans la période de chaque symbole et **en ce que** 2ⁿ⁻¹ états représentant n-1 bits de données dans chaque symbole, atteint par une modulation par déplacement de phase, sont indiqués par le déphasage de la transition de niveau dans chaque période dudit chaque symbole, par rapport à une position zéro prédéterminée
formant ainsi un signal ayant une transition de niveau et un déphasage dans chaque période de symbole, chaque symbole représentant 2ⁿ états et couvrant le contenu jusqu'à n desdits bits, n étant un nombre entier supérieur à 1 ;
transmettre le flux en série de symboles (SD) ;
recevoir le flux en série de symboles (SD) transmis ; et
reconvertir le flux en série de symboles (SD) transmis en le flux en série de données numériques (SD_{R}) .

2. Procédé selon la revendication 1, dans lequel l'étape de reconversion est effectuée en utilisant une récupération d'horloge et de données.

3. Procédé selon la revendication 2, dans lequel la récupération d'horloge est effectuée par une commande en boucle à verrouillage de phase qui est déclenchée par le flux en série de données (SD) pour générer une pluralité de signaux d'horloge (CKn) qui sont déphasés d'une quantité prédéterminée les uns par rapport aux autres ; et
la récupération de données est effectuée en détectant des phases individuelles des symboles du flux en série des symboles (SD) en utilisant la pluralité de signaux d'horloge (CKn) et en reconnaissant séparément les différents déphasages de la transition de niveau dans la période de chaque symbole par rapport à la position zéro prédéterminée et la direction de la transition de niveau dans la période de chaque symbole pour dériver les données récupérées (SD_{R}).

4. Procédé selon la revendication 3, dans lequel la position zéro prédéterminée est définie par une horloge récupérée (CK_{R}) .

5. Procédé selon l'une des revendications 1 à 4, dans lequel l'étape de conversion du flux en série de données numériques en un flux en série de symboles (SD) est effectuée par une combinaison d'encodage bi-phase, de modulation par déplacement de phase et d'encodage de pente d'amplitude.

6. Procédé selon la revendication 5, dans lequel un troisième groupe d'états de chaque symbole (SD) atteint par un encodage de pente d'amplitude est indiqué par une transition de niveau dans la période de chaque symbole.

7. Dispositif de transmission en série de données numériques, comprenant :
une unité de génération (100) adaptée pour générer un flux en série de données numériques comprenant une séquence de bits, chacun desdits bits présentant deux états ;
une unité de conversion (200) adaptée pour convertir le flux en série de données numériques en un flux en série de symboles (SD) par une combinaison d'encodage bi-phase et de modulation par déplacement de phase ; et
dans lequel ladite unité de conversion (200) est **caractérisée par** un moyen accomplissant un encodage bi-phase dans lequel deux états représentant 1 bit de données dans chaque symbole sont indiqués par une direction de la transition de niveau dans la période de chaque symbole et par un moyen accomplissant une modulation par déplacement de phase dans laquelle 2ⁿ⁻¹ états représentant n-1 bits de données dans chaque symbole sont indiqués par le déphasage de la transition de niveau dans ladite période dudit chaque symbole, par rapport à une position zéro prédéterminée
formant ainsi un signal ayant une transition de niveau et un déphasage dans chaque période de symbole, chaque symbole représentant 2ⁿ états et couvrant le contenu jusqu'à n desdits bits, n étant un nombre entier supérieur à 1 ; et par
un moyen transmettant le flux en série de symboles via une ligne de transmission en série ; et
une unité de reconversion (300) adaptée pour transmettre le flux en série de symboles (SD) et pour reconvertir le flux en série de symboles transmis en le flux en série de données numériques (SD_{R}).

8. Dispositif selon la revendication 7, dans lequel l'unité de reconversion (300) est une unité de récupération d'horloge et de données.

9. Dispositif selon la revendication 8, dans lequel l'unité de récupération d'horloge et de données comprend
une unité de boucle à verrouillage de phase (3) qui est adaptée pour être déclenchée par un flux en série de données (SD) pour générer une pluralité de signaux d'horloge (CKn) qui sont déphasés d'une quantité prédéterminée les uns par rapport aux autres ; et
une unité de récupération de données qui est adaptée pour détecter des phases individuelles des symboles du flux en série de symboles (SD) en utilisant la pluralité de signaux d'horloge (CKn) et pour reconnaître séparément les différents déphasages de la transition de niveau dans la période de chaque symbole par rapport à la position zéro prédéterminée et la direction de la transition de niveau dans la période de chaque symbole pour dériver les données récupérées (SD_{R}) .

10. Dispositif selon la revendication 9, dans lequel l'unité de récupération de données comprend une pluralité de bascules bistables (1, 2) recevant chacune le flux en série de symbole (SD) transmis.

11. Dispositif selon la revendication 9, dans lequel chacune de la pluralité de bascules bistables (1, 2) reçoit l'un de la pluralité de signaux d'horloge (CKn) de l'unité de boucle à verrouillage de phase (3).

12. Dispositif selon l'une des revendications 9 à 11, dans lequel l'unité de reconversion (300) est adaptée pour définir la position zéro prédéterminée par une horloge récupérée (CK_{R}).

13. Dispositif selon l'une des revendications 7 à 12, dans lequel l'unité de conversion (200) est adaptée pour convertir le flux en série de données numériques en un flux en série de symboles (SD) par une combinaison d'encodage bi-phase, de modulation par déplacement de phase et d'encodage de pente d'amplitude.

14. Dispositif selon la revendication 13, dans lequel l'unité de conversion (200) est adaptée pour encoder chaque symbole de telle manière qu'un troisième groupe d'états de chaque symbole (SD) atteint par un encodage de pente d'amplitude est indiqué par une transition de niveau dans la période de chaque symbole.
